# Europäisches Patentamt

# European Patent Office

# Office européen des brevets

(19)

(11) Veröffentlichungsnummer: **0 054 734**
A1

(12) # EUROPÄISCHE PATENTANMELDUNG

(21) Anmeldenummer: 81109433.3

(22) Anmeldetag: 30.10.81

(51) Int. Cl.³: **F 16 D 27/14,** F 16 D 65/54

(30) Priorität: 22.12.80 DE 3048577

(43) Veröffentlichungstag der Anmeldung: 30.06.82
Patentblatt 82/26

(84) Benannte Vertragsstaaten: **CH DE FR GB IT LI**

(71) Anmelder: **Christian Mayr GmbH & Co. KG,**
**Eichenstrasse 1, D-8951 Mauerstetten (DE)**

(72) Erfinder: **Vogt, Herbert, Blütenring 81,**
**D-8951 Mauerstetten (DE)**
Erfinder: **Dasser, Manfred, Edelsbergstrasse 8,**
**D-8964 Nesselwang (DE)**

(74) Vertreter: **Ruschke, Hans Edvard et al, c/o Ruschke &**
**Partner Patentanwaelte Pienzenauerstrasse 2,**
**D-8000 Munchen 80 (DE)**

(54) **Selbsttätige Nachstellvorrichtung für das Lüftspiel eines durch elektromagnetische und Federkräfte betätigten Kupplungs-**
**und/oder Bremsaggregats.**

(57) Selbsttätige Nachstellvorrichtung für das Lüftspiel eines durch elektromagnetische und Federkräfte betätigten Kupplungs- und/oder Bremsaggregats, mit einer das zu übertragende/abzubremsende Drehmoment führenden Welle, einem auf dieser Welle angeordneten, axial verschieblichen und das Brems- bzw. Kupplungsmoment auf einen Reibbelag übertragenden, axial verschieblichen Drehteil, mit einer konzentrisch dazu angeordneten Ankerscheibe, die von einem eine Magnetspule tragenden Spulenträger beaufschlagbar ist, und mit einem in einer Richtung wirkenden Gesperre für eines der vorgenannten Teile. Die Erfindung wird darin gesehen, daß auf der Welle (19) ein in Richtung auf den Reibbelag axial verschieblicher, drehstarr mit der Welle verbundener Schleppring (4) angeordnet ist, der in Richtung auf seine Ausgangslage federnd vorgespannt ist und daß die Ankerscheibe (6) über eine der Größe nach einstellbare, in axialer Richtung wirkende Totgangverbindung an den Schleppring (4) angekoppelt ist, wobei die Ankerscheibe drehstarr mit diesem verbunden und federnd in Richtung auf den Schleppring (4) beaufschlagt ist.

EP 0 054 734 A1

0054734

-------------------------------------------------------------------

Selbsttätige Nachstellvorrichtung für das Lüftspiel eines durch elektromagnetische und Federkräfte betätigten Kupplungs- und/oder Bremsaggregats

-------------------------------------------------------------------

Die vorliegende Erfindung betrifft eine selbsttätige Nachstellvorrichtung nach dem Oberbegriff des Anspruches 1.

Es sind bereits verschiedenartige Nachstellvorrichtungen für das Lüftspiel von Kupplungs- und/oder Bremsaggregaten bekannt.

So zeigt beispielsweise die Nachstellvorrichtung der DE-PS 1 914 469 eine insbesondere für Elektromotoren geeignete Einscheibenbremse, die eine auf der Motorwelle axial verschiebbar angeordnete Bremsscheibe und eine Ankerscheibe aufweist, die am Motorgehäuse axial verschiebbar geführt ist und zum Abbremsen durch die Federkraft gegen die Bremsscheibe gedrückt bzw. zum Lüften der Bremse entgegen der Federkraft von einem mit einer Magnetwicklung versehenen Magnetkörper angezogen wird, der am Motorgehäuse axial verschiebbar geführt ist. Dabei sind sowohl die Ankerscheibe als auch der Magnetkörper mit in von der Bremsscheibe abgewandter Richtung wirksamen Gesperren versehen und der Magnetkörper ist nur durch die zwischen ihm und der Ankerscheibe wirkenden magnetischen Anziehungskräfte in Richtung auf die durch ihr Gesperre arretierte Ankerscheibe verschiebbar.Diese bekannte Nachstellvorrichtung für eine Einscheibenbremse an einem Elektromotor zeichnet sich durch eine aufwendige und platzraubende Bauweise aus.

Weiterhin gibt es verschiedene andere selbstnachstellende elektromagnetische Kupplungen, Bremsen oder Kupplungsbremsaggregate, bei denen die Drehmomentübertragung zwischen der Antriebswelle und der Ankerscheibe etwa mit Hilfe einer Keilwellenverzahnung erfolgt, wobei die automatische Nachstellung des Lüftspieles mittels eines reibenden Schleppringes durchgeführt wird, der etwa auf der Antriebswelle aufsitzt. Der Rückzug der Ankerscheibe (um das Lüftspiel) wird vielfach über Tellerfedern oder ähnliche Federscheiben durchgeführt. Auch werden vereinzelt in Axialrichtung angeordnete, auf dem Umfang verteilte Spiraldruckfedern verwendet.

Die bekannten selbsttätigen Nachstellvorrichtungen weisen mindestens eine oder mehrere der nachstehend aufgeführten Nachteile auf. Bei einer Übertragung des Drehmomentes über

eine Verzahnung, etwa eine Keilwellenverzahnung (wie oben erwähnt) wird diese mit Sicherheit ausschlagen, so daß das Radialspiel der Ankerscheibe sehr groß wird. Die Verzahnung kann auch verklemmen, besonders wenn sie schmal ausgeführt ist. Schließlich hat die Verzahnungsreibung einen ungünstigen Einfluß auf die Schaltgenauigkeit. Die Reibkraft am Schleppring ist undefiniert, da keine Einstellmöglichkeit vorhanden ist: Der Schleppring wird in den meisten Fällen mit einer leichten Preßpassung versehen auf die Antriebswelle aufgezogen, so daß bei der nicht zu vermeidenden Verschmutzung infolge des Reibbelagabriebes die Funktion der selbsttätigen Nachstellvorrichtung in Frage gestellt wird, weil die Reibung an der Verzahnung bzw. im Schleppring aufgrund des Schmutzes undefiniert hoch werden kann, d.h. es kann ein Verbacken eintreten.

Hiernach ist es die der vorliegenden Erfindung zugrundeliegenden Aufgabe, die oben erwähnten Nachteile zu vermeiden, und zwar insbesondere soll eine gegenüber Verschmutzung unempfindliche, spielfreie und einfach aufgebaute, selbsttätige Nachstellvorrichtung für das Lüftspiel von Kupplungs- und/oder Bremsaggregaten vorgesehen werden.

Diese Aufgabe wird erfindungsgemäß durch die vorliegende Erfindung gelöst. Durch die Verwendung der Übertragungsfedern erfolgt eine spielfreie Drehmomentübertragung zwischen der Antriebswelle und der Ankerscheibe, es kann kein Ausschlagen oder Klemmen eintreten und die Nachstellvorrichtung ist verschmutzungsunempfindlich und spielfrei über die gesamte Lebensdauer. Die Nachstellung erfolgt entweder über eine Klemmung (Reibung) oder ein axiales Gesperre im Schleppring. Die Reibkraft des Schleppringes ist durch am Umfang desselben vorgesehene Schrauben (Fig. 3) bzw. durch die Vorspannung der Spannclemente (Fig. 4) genau einstellbar. Die axialen Gesperre der Fig. 5 und 6 sind gegen Verschmutzung besonders unempfindlich.

Im nachfolgenden wird unter Bezugnahme auf die beigefügten Zeichnungen ein konkretes Ausführungsbeispiel beschrieben.

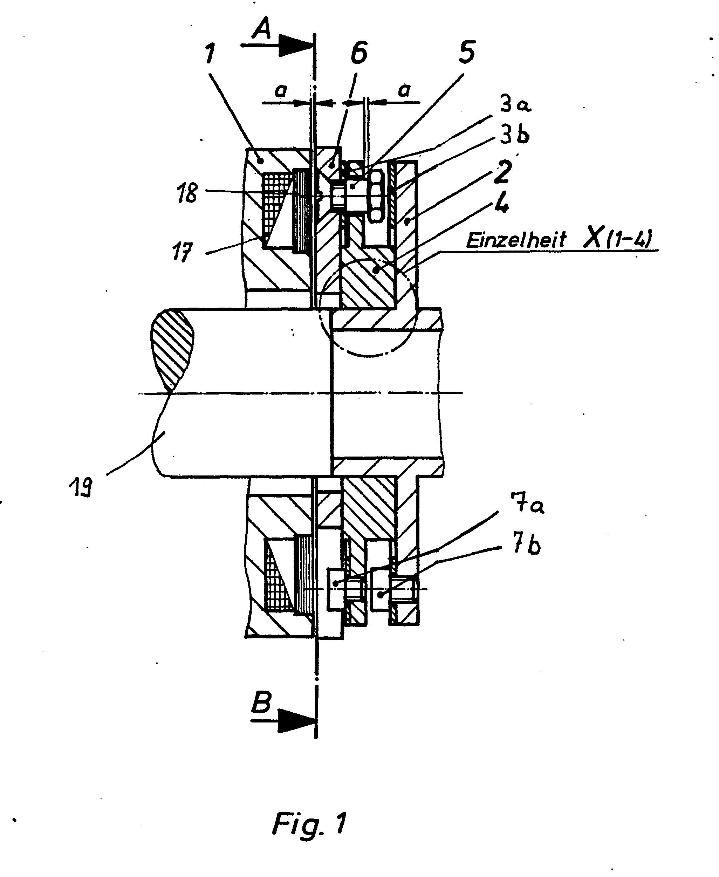

Fig. 1 zeigt im Schnitt in prinzipieller Darstellung eine in einer Richtung wirkende Nachstellvorrichtung, etwa für eine Einscheibenbremse.

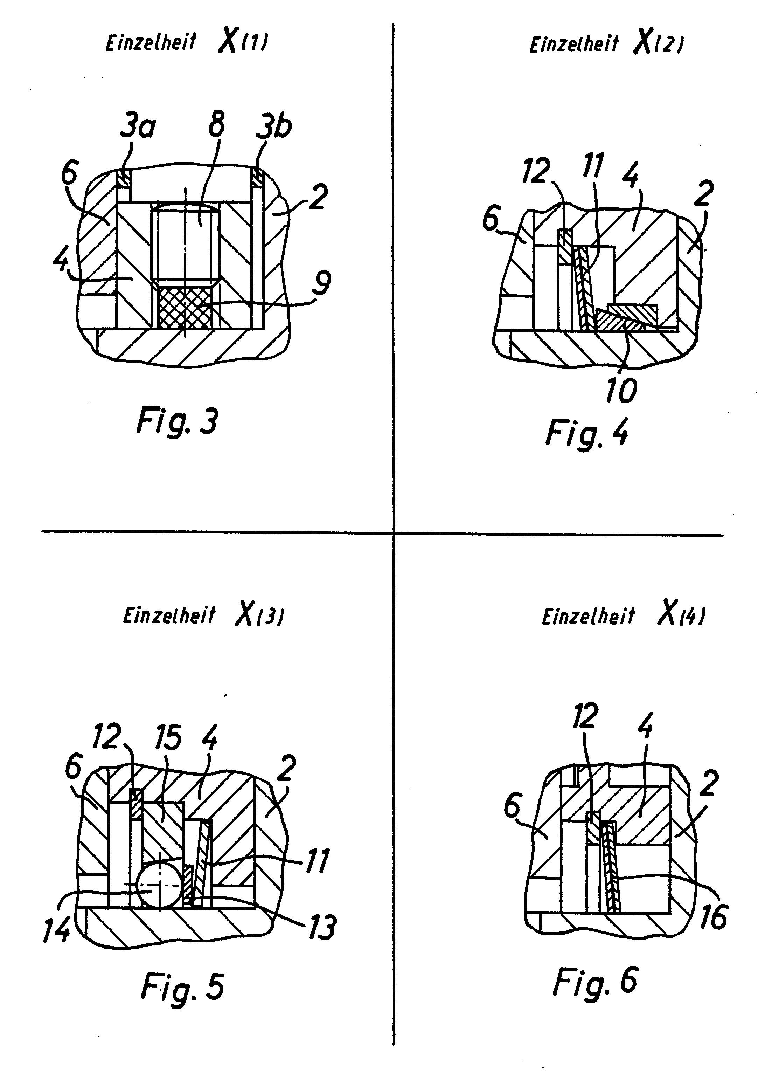

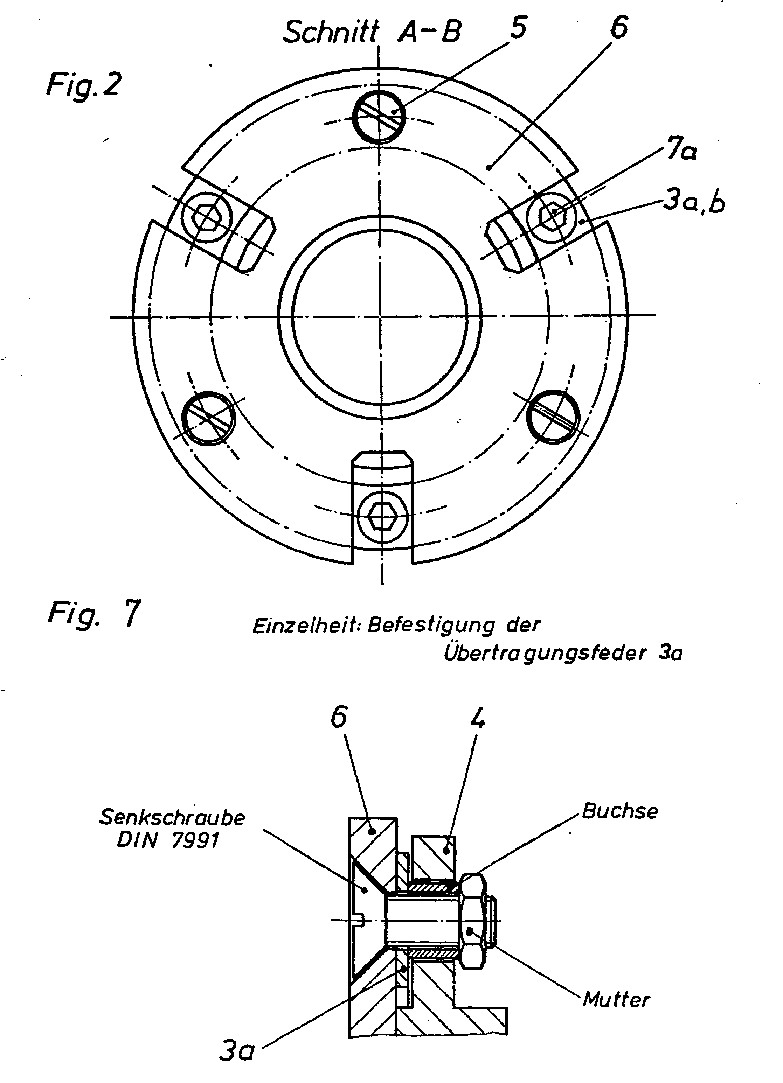

Fig. 2 zeigt einen Schnitt längs Linie A-B in Fig. 1, während die Fig. 3 bis 6 vier Alternativen für die Einzelheit X aus Fig. 1 zeigen. Eine weitere Fig. 7 zeigt die Art der Befestigung der Übertragungsfeder 3a an der Ankerscheibe 6.

Beim Einbau der erfindungsgemäßen Nachstellvorrichtung in ein Kupplungsbremsaggregat müßte in dem rechts von dem radialen Flansch der Flanschnabe 2 freigelassenen Bereich (Fig. 1) eine spiegelbildlich ausgebildete, in der entgegengesetzten Richtung arbeitende weitere Nachstellvorrichtung angeordnet sein, die über eine nicht dargestellte elektromagnetische Betätigung auf eine ebenfalls nicht dargestellte Kupplungsscheibe arbeiten würde.

In Fig. 1 ist mit dem Bezugszeichen 19 eine Welle angedeutet, deren Drehmoment über die erfindungsgemäße Nachstellvorrichtung an den mit einer Magnetspule 17 und einen Reibbelag 18 versehenen Spulenträger 1 zu übertragen ist. Dabei ist bewußt offengelassen, ob die Drehmomentübertragung von der Welle auf den Spulenträger 1 zum Zwecke der Abbremsung der Welle 19 oder zum Ankuppeln des Spulenträgers 1 an die Rotation der Welle 19 vorgesehen ist, wobei im letzteren Fall der Spulenträger drehbar gelagert sein müßte.

Auf einem Absatz an der Welle 19 ist eine Flanschnabe 2 fest mit der Welle 19 verbunden, d.h. die Flanschnabe 2 rotiert zusammen mit der Welle 19. Die Flanschnabe besteht aus einem mit der Welle verbundenen nabenartigen Abschnitt und einem radial nach außen sich erstreckenden umlaufenden Flansch. Auf dem nabenartigen Abschnitt der Flanschnabe 2 ist konzentrisch ein Schleppring 4 angeordnet, der in noch zu beschreibender Weise in Richtung auf den Reibbelag 18 bzw. die Magnetspule 17 axial verschieblich ist, wobei die Ankerscheibe 6 in ebenfalls noch zu beschreibender Weise mit dem Schleppring 4 konzentrisch zur Welle 19 verbunden ist.

Von der mit der Welle 19 umlaufenden Flanschnabe 2 wird das
Drehmoment mit Hilfe einer ringförmigen Übertragungsfeder 3b
auf den Schleppring 4 übertragen. Die im vorliegenden Zusammenhang interessierenden Übertragungsfedern 3a, b sind flache
scheibenförmige Ringe, deren Umfang in Fig. 2 angedeutet ist.
Die Übertragungsfeder 3b ist an drei um 120° gegeneinander versetzten Stellen durch parallel zur Rotationsachse verlaufende
Befestigungsschrauben mit dem Flansch der Flanschnabe verschraubt.
In Fig. 1 ist in der unteren Hälfte eine dieser Befestigungsschrauben 7b gezeigt.

Die Übertragungsfeder 3b ist andererseits an drei weiteren,
gegen die vorgenannten Stellen um jeweils 60° versetzten Stellen mit dem radial vorstehenden Flansch des Schleppringes 4 verschraubt, wobei allerdings in Fig. 1 diese Schrauben nicht in
der Schnittebene liegen. Nachdem die ringförmige Übertragungsfeder 3b an umfangsmäßig voneinander auf Abstand stehenden
Punkten abwechselnd mit der Flanschnabe 2 bzw. mit dem Schleppring verschraubt ist und nachdem die Übertragungsfeder in Umfangsrichtung eine sehr hohe Eigensteifigkeit hat, andererseits
aber in Querrichtung nur eine sehr niedrige Eigensteifigkeit besitzt, wird das von der Flanschnabe 2 kommende Drehmoment in Umfangsrichtung spielfrei auf den Schleppring 4 übertragen. Dieser rotiert also zusammen mit der Flanschnabe, ist jedoch axial in Richtung auf die Magnetspule 17 verschieblich, wie unter Bezugnahme auf die alternativen Einzelheiten nach den Fig. 3 bis 6 weiter unten besprochen werden sollen. Die axiale Verschiebung des Schleppringes 4 geht dabei einher mit einer axialen Auslenkung der ringförmigen Übertragungsfeder 3b.

Die Drehmomentübertragung zwischen dem Schleppring 4 und der Ankerscheibe 6 findet in prinzipiell der gleichen Weise statt wie soeben unter Bezugnahme auf die Flanschnabe 2 und den Schleppring 4 erläutert. Eine ringförmige Übertragungsfeder 3a ist wiederum durch auf dem Umfang gleichmäßig verteilte Befestigungsschrauben 7a mit dem Schleppring 4 fest verbunden, während an gegenüber diesen Verbindungspunkten umfangsmäßig versetzten Stellen die Übertragungsfeder 3a fest mit der Ankerscheibe 6 verbunden ist, und zwar wie dies in der Einzelheit "Befestigung der Übertragungsfeder 3a" in den Zeichnungen dargestellt ist: Der Mitnahmebolzen 5 besteht insgesamt aus einer Senkschraube mit einer aufgeschobenen Buchse und einer Mutter, die gegen die Buchse festgezogen ist. Da die Senkschraube in die Ankerscheibe 6 eingesetzt ist, wird die Übertragungsfeder 3a gegen die Ankerscheibe 6 gedrückt und dort festgehalten. Die Buchse weist gegenüber dem Flansch des Schleppringes 4 ein geringes Übermaß auf, welches dem eingestellten Luftspalt "a" entspricht. Im Schnitt A-B der Fig. 2 ist die Anordnung bzw. die umfangsmäßige Verteilung der Mitnahmebolzen 5 und der Befestigungsschrauben 7a gezeigt.
Das Drehmoment geht also vom Schleppring 4 über die ringförmige
Übertragungsfeder 3a auf die Ankerscheibe 6 über. Durch die
hohe Eigensteifigkeit der Übertragungsfeder 3a in Umfangsrichtung ist die Ankerscheibe 6 in Umfangsrichtung bezüglich
des Schleppringes 4 festgelegt, während die axiale Lage der
Ankerscheibe 6 aufgrund der geringen Eigensteifigkeit der
Übertragungsfeder 3a in dieser Richtung bestimmt wird durch
eine Totgangverbindung zwischen der Ankerscheibe und dem
Schleppring 4 in Form des Mitnahmebolzens 5, der durch eine
Bohrung im Schleppring 4 hindurchgeführt ist. Diese Bohrung
ist größer als der Außenumfang des Mitnahmebolzens 5, so daß
eine Drehmomentübertragung an dieser Stelle nicht erfolgt.
Die genannte Mutter auf dem Mitnahmebolzen 5 begrenzt die
Möglichkeit der Ankerscheibe 6, sich von dem Schleppring 4
aufgrund der axialen Ausfederung der Übertragungsfeder 3a
zu entfernen.

Die Übertragungsfeder 3b hat in Axialrichtung eine höhere Eigensteifigkeit als die Übertragungsfeder 3a, damit beim Einschalten der Magnetspule 17 zunächst nur die Ankerscheibe 6 axial
bewegt wird. Sobald jedoch aufgrund von größerer Schalthäufigkeit eine gewisse Reibbelagabnutzung merkbar wird, so daß
der Luftspalt a zwischen der Ankerscheibe 6 und dem Reibbelag 18 größer als ursprünglich eingestellt ist, wird die Ankerscheibe 6 beim Einschalten des Elektromagneten den Schleppring 4 um ein geringes Stück nach links mitziehen, und zwar entgegen der axialen Federwirkung der Übertragungsfeder 3b. Aufgrund der in den Fig. 3 bis 6 gezeigten reibschlüssigen Klemmungen bzw. Gesperre kann der Schleppring nur in einer Richtung, d.h. in Fig. 1 nach links bewegt werden, so daß der Schleppring 4 jeweils um so viel nach links bewegt wird, wie der Abnutzung an Reibbelag 18 entspricht. Mit anderen Worten stellt sich der Luftspalt a selbsttätig nach, nämlich auf einen Wert, der am Mitnahmebolzen 5 eingestellt wurde. Die Veränderung des Lüftspieles kann durch Einfügen von Abstimmscheiben zwischen der Buchse des Mitnahmebolzens und der Mutter erfolgen.

Die alternativen reibschlüssigen Klemmungen bzw. Gesperre der Fig. 3 bis 6 werden im nachfolgenden erläutert. In Fig. 3 ist eine radial verlaufende Bohrung im Schleppring 4 gezeigt, in die ein Reibbelagstöpsel 9 eingesetzt ist, der von einer Klemmschraube 8 beaufschlagt wird. Durch die Pressung zwischen dem Reibbelagstöpsel 9 und dem nabenartigen Abschnitt der Flanschnabe 2 wird erreicht, daß der Schleppring 4 sich nur in Fig. 1 nach links bewegt, weil die nach rechts gerichtete Kraft der Übertragungsfeder 3b nach einer gewissen axialen Auslenkung zur Überwindung der Reibung aufgrund des Reibbelagstöpsels nicht ausreicht, während die von der Magnetspule 17 nach links ausgeübte Kraft wesentlich höher ist und

zur Überwindung der genannten Reibung ausreicht.

In Fig. 4 ist eine reibschlüssige Klemmung gezeigt, welche sich zweier konischer Spannelemente 10 bedient, die zwischen dem Schleppring 4 und dem nabenartigen Abschnitt angeordnet sind und von Tellerfedern 11 beaufschlagt werden, die wiederum von einem im Schleppring 4 eingesetzten Sicherungsring 12 festgelegt werden. Durch die konischen Spannelemente 10 erfolgt eine reibschlüssige Klemmung bei einer Bewegung des Schleppringes 4 nach rechts, während eine Verschiebung des Schleppringes nach links möglich ist.

Die Fig. 5 zeigt eine Ausführungsform eines in einer Richtung wirkenden Gesperres in Form einer gehärteten Stahlkugel 14 und eines damit zusammenwirkenden, gehärteten Konusringes 15. Die Kugel 14 liegt auf dem Außenumfang des Nabenabschnittes der Flanschnabe 2 auf und stützt sich auf der anderen Seite auf der inneren Kegelfläche des gehärteten Konusringes 15 ab, der in eine Ausdrehung im Schleppring eingesetzt und durch einen Sicherungsring 12 bezüglich desselben festgelegt ist. Die Kugel 14 wird auf der einen größeren Innendurchmesser aufweisenden Seite des Konusrings 15 durch eine Scheibe 13 am Austritt aus dem Konusring gehindert, wobei die Scheibe 13 wiederum durch eine Tellerfeder 11 federnd beaufschlagt ist.

Wie ersichtlich stellt diese Anordnung ein Gesperre dar, das eine Bewegung des Schleppringes 4 in Fig. 1 oder 5 nach links gestattet, andererseits aber eine Axialbewegung nach rechts verhindert. Der bevorzugte Neigungswinkel der Kegelfläche gegenüber der Drehachse ist 8°.

Schließlich zeigt Fig. 6 eine weitere Ausführungsform eines solchen Gesperres. Zwischen dem Schleppring 4 und dem Nabenabschnitt der Flanschnabe 2 stützen sich innen geschlitzte Tellerfedern oder radial geschlitzte Sternscheiben 16 ab, die am Schleppring 4 durch einen Sicherungsring 12 festgelegt sind.

Durch die im Schnitt gezeigte Schrägstellung der Tellerfedern oder Sternscheiben 16 in Bezug auf eine Radialebene ist der Schleppring 4 frei nach links verschiebbar, während bei einer entgegengesetzten Axialbewegung eine Selbsthemmung infolge der Keilwirkung der Tellerfedern oder Sternscheiben 16 zwischen dem Schleppring 4 und dem nabenartigen Abschnitt der Flanschnabe 2 eintritt.

Die Fig. 1 zeigt die Ausgangslage der Nachstellvorrichtung bei nicht erregter Magnetspule 17 und ohne jede Abnutzung des Reibbelages 18. Beim Einschalten der Magnetspule 17 legt sich die Ankerscheibe 6 an den Reibbelag 18 an, d.h. daß der Luftspalt a zwischen den beiden letztgenannten Elementen ebenso wie der Abstand a an der Mutter des Mitnahmebolzens 5 verschwindet. Dies geschieht unter federnder axialer Auslenkung der ringförmigen Übertragungsfeder 3a und hat zur Folge, daß die Welle 19 abgebremst wird, sofern der Spulenträger 1 fest mit einem nicht dargestellten Gehäuse eines Kupplungsaggregates oder dergleichen verbunden ist. In ähnlicher Weise könnte dieser Vorgang auch zum Ankuppeln des Spulenträgers 1 oder einer Kupplungsscheibe an die Welle 19 dienen.

Sobald sich am Reibbelag eine merkbare Abnutzung eingestellt hat, wird die Ankerscheibe 6 infolge der Magnetkräfte beim Schalten weiter nach links wandern, als es dem Luftspalt a bzw. dem am Mitnahmebolzen 5 eingestellten Abstand a entspricht, und zwar indem letzterer den Schleppring 4 entgegen der Rückstellkraft der ringförmigen Übertragungsfeder 3b nach links mitzieht. Wegen der in einer Richtung wirkenden reibschlüssigen Klemmung bzw. Gesperre nach einer der Fig. 3 bis 6, kann der Schleppring 4 jedoch nach Abschalten des Elektromagneten nicht wieder der Rückstellkraft der Übertragungsfeder 3b folgend nach rechts zurückwandern, wird also bleibend um einen Betrag nach links verschoben, der gerade der Abnutzung des Reibbelages 18 entspricht. Auf diese Weise bleibt der Luftspalt a konstant trotz einer zunehmenden Abnutzung der Reibbeläge 18. Erst wenn diese vollkommen abge-

13
- 46 -

nutzt sind, müssen aufwendigere Wartungsarbeiten zum Ersatz der Reibbeläge vorgenommen werden. Nachdem der Luftspalt a über einen langen Zeitraum konstant bleibt, kann eine langdauernde hohe Schaltgenauigkeit ohne manuelle Nachstellarbeiten erreicht werden. Durch die Verwendung der Übertragungsfedern

3a und 3b erfolgt eine absolut spielfreie Übertragung des Drehmoments (In Umfangsrichtung) von der Welle 19 auf die Ankerscheibe 6.


HER/bm

MÜNCHEN
Pienzenauerstr. 2
8000 München 80
Telefon: (089) 98 03 24,
98 72 58, 98 88 00
Kabel: Quadratur München
Telex: 5 227 67

BERLIN
Kurfürstendamm 182/183
1000 Berlin 15
Telefon: (030) 8 83 70 78 / 79
Kabel: Quadratur Berlin

RUSCHKE & PARTNER
PATENTANWÄLTE

München, den 30. Okt. 1981

0054734

Dr.-Ing. Hans Ruschke*– bis .980 –
Dipl.-Ing. Hans E. Ruschke
Dipl.-Ing. Olaf Ruschke
Dipl-Ing. Jürgen Rost
Dipl.-Chem. Dr. Ulrich Rotter

Zugelassen beim Europäischen Patentamt
Admitted to the European Patent Office

* in Berlin

M 4310 H

Firma Christian Mayr GmbH & Co. KG

Eichenstr. 1, 8951 Mauerstetten, BRD

------------------------------------------------------------

P a t e n t a n s p r ü c h e

1. Selbsttätige Nachstellvorrichtung für das Lüftspiel eines durch elektromagnetische und Federkräfte betätigten Kupplungs- und/oder Bremsaggregats, mit einer das zu übertragende/abzubremsende Drehmoment führenden Welle, einem auf dieser Welle angeordneten, axial verschieblichen und das Brems- bzw. Kupplungsmoment auf einen Reibbelag übertragenden, axial verschieblichen Drehteil, mit einer konzentrisch dazu angeordneten Ankerscheibe, die von einem eine Magnetspule tragenden Spulenträger beaufschlagbar ist, und mit einem in einer Richtung wirkenden Gesperre für eines vorgenannter Teile, dadurch gekennzeichnet, daß auf der Welle (19) ein in Richtung auf den Reibbelag axial verschieblicher,

- 2 -

drehstarr mit der Welle verbundener Schleppring (4) angeordnet ist, der in Richtung auf seine Ausgangslage federnd vorgespannt ist und daß die Ankerscheibe (6) über eine der Größe nach einstellbare, in axialer Richtung wirkende Totgangverbindung an den Schleppring (4) angekoppelt ist, wobei die Ankerscheibe drehstarr mit diesem verbunden und federnd in Richtung auf den Schleppring (4) beaufschlagt ist.

2. Vorrichtung nach Anspruch 1, dadurch gekennzeichnet, daß die Welle (19) mit einer Flanschnabe (2) versehen ist, auf der der Schleppring (4) angeordnet ist.

3. Vorrichtung nach Anspruch 2, dadurch gekennzeichnet, daß die Axialverschiebung des Schlepprings (4) durch eine reibschlüssige Klemmverbindung (Fig. 3 bzw. 4) zwischen dem Schleppring und der Flanschnabe (2) beschränkt ist.

4. Vorrichtung nach Anspruch 2, dadurch gekennzeichnet, daß mittels eines in einer Richtung wirkenden Gesperres (Fig. 5 und 6) zwischen dem Schleppring und der Flanschnabe (2) beschränkt ist.

5. Vorrichtung nach einem der voranstehenden Ansprüche, dadurch gekennzeichnet, daß die federnde Beaufschlagung des Schleppringes durch eine ringförmige Übertragungsfeder 3b zwischen der Flansch-

nabe (2) und dem Schleppring (4) erfolgt, wobei die Übertragungsfeder an auf dem Umfang verteilten Punkten abwechselnd mit den genannten Teilen verbunden ist.

6. Vorrichtung nach einem der voranstehenden Ansprüche, dadurch gekennzeichnet, daß die Totgangverbindung durch mehrere, parallel zur Drehachse ausgerichtete Mitnahmebolzen (5) ausgebildet ist, die mit der Ankerscheibe (6) fest verbunden durch entsprechende Bohrungen in dem Schleppring (4) hindurchragen und am von der Ankerscheibe abgewandten Ende mit einer Begrenzungsmutter zur Einstellung des toten Ganges (Lüftspiel) versehen sind.

7. Vorrichtung nach einem der voranstehenden Ansprüche, dadurch gekennzeichnet, daß die drehstarre, federnde Verbindung zwischen dem Schleppring (4) und der Ankerscheibe (6) ebenfalls als ringförmige Übertragungsfeder 3a ausgebildet ist.

8. Vorrichtung nach einem der voranstehenden Ansprüche, dadurch gekennzeichnet, daß die Eigensteifigkeit in Axialrichtung der einen ringförmigen Übertragungsfeder 3b höher ist als die der anderen Übertragungsfeder 3a.

Fig. 1

Einzelheit **X**(1)

3a 8 3b

6 2

4 9

**Fig. 3**

Einzelheit **X**(2)

12 11 4

6 2

10

**Fig. 4**

Einzelheit **X**(3)

12 15 4

6 2

11

14 13

**Fig. 5**

Einzelheit **X**(4)

12 4

6 2

16

**Fig. 6**

0054734

Schnitt A-B

**Fig.2**

5

6

7a

3a,b

**Fig. 7**

Einzelheit: Befestigung der
Übertragungsfeder 3a

6

4

Buchse

Senkschraube
DIN 7991

Mutter

3a

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| XY | <u>DE - A - 2 738 542</u> (GEORGII-KOBOLD) <br> * Insgesamt * | 1,4,5 <br> 3,6 |
| | -- | |
| XY | <u>DE - A - 1 425 249</u> (EATON YALE) <br> * Insgesamt * | 1,4 <br> 2,3 |
| | -- | |
| XY | <u>DE - A - 2 135 821</u> (WARNER ELEC-<br>TRIC) <br> * Seiten 11-20; Abbildungen 2,3, 6,9-13 * | 1,3,5, <br> 7,8 <br> 4,6 |
| | -- | |
| Y | <u>US - A - 3 762 522</u> (KIRSCHLING) <br> * Insgesamt * | 2,3,4, <br> 6 |
| | -- | |
| DA | <u>DE - C - 1 914 469</u> (BAUMULLER GmbH) | |
| A | <u>US - A - 3 858 700</u> (FMC CORP.) | |
| A | <u>DE - B - 1 600 008</u> (MORGANITE <br>CARBON) | |
| A | <u>EP - A - 0 020 056</u> (AUTOMOTIVE <br>PRODUCTS) | |
| | ---- | |

**KLASSIFIKATION DER ANMELDUNG (Int. Cl.³)**

F 16 D 27/14
    - 65/54

**RECHERCHIERTE SACHGEBIETE (Int. Cl.³)**

F 16 D 27/00
         63/00
         65/00

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 25-02-1982 | BALDWIN |